# EUROPEAN PATENT APPLICATION

(11) **EP 4 570 592 A1**
(43) Date of publication of application: **18.06.2025**
(21) Application number: 23852299.9
(22) Date of filing: 12.07.2023
(51) Int. Cl.: B60Q 1/00, B60Q 1/26, F21Y 115/10, F21Y 115/30, F21V 7/00, F21V 14/04, F21W 102/00, F21W 103/60

(54) **ROAD SURFACE RENDERING DEVICE**

(30) Priority: 10.08.2022 JP 2022127814
(71) Applicant: Koito Manufacturing Co., Ltd., Tokyo 141-0001 (JP)
(72) Inventor: WATANO Yuichi, Shizuoka-shi, Shizuoka 424-8764 (JP); TOTSUKA Takahiro, Shizuoka-shi, Shizuoka 424-8764 (JP); MARUYAMA Yuta, Shizuoka-shi, Shizuoka 424-8764 (JP)
(74) Representative: Hoffmann Eitle
(86) International application number: PCT/JP2023/025708
(87) International publication number: WO 2024/034316

(57) **Abstract**

A road surface rendering device (4) is capable of road surface rendering that indicates the same concept as at least a concept indicated by a direction indicator. An emission-enabled region (R) of the road surface rendering device (4) includes a first region (R1) where other traffic participants behind a vehicle are visually recognizable, and a second region (R2) where other traffic participants are not visually recognizable. The road surface rendering of the first region (R1) and the road surface rendering of the second region (R2) can be separately controlled.

## Description

### TECHNICAL FIELD

The present disclosure relates to a road surface rendering device.

### BACKGROUND ART

Patent Literature 1 discloses a vehicle departure notification display device that regards detection of switching from ON to OFF of a brake of the vehicle as necessity determination for a departure notification display and causes a road surface rendering unit to render the departure notification display.

### CITATION LIST

### PATENT LITERATURE

Patent Literature 1: JP2020-055519A

### SUMMARY OF INVENTION

### TECHNICAL PROBLEM

The road surface rendering device mounted on a vehicle may be used to render a road surface in a region in front of the vehicle. However, in a case where such a road surface rendering is not directed to another traffic participant (another vehicle or the like) behind an own vehicle, if the road surface rendering is visible to the other traffic participant, there is a concern that the other traffic participant may misunderstand.

An object of the present disclosure is to provide a road surface rendering device capable of performing road surface rendering without causing other traffic participants to misunderstand even when the other traffic participants are behind an own vehicle.

### SOLUTION TO PROBLEM

A road surface rendering device according to an aspect of the present disclosure is a road surface rendering device configured to perform road surface rendering indicating at least a concept which is the same as a concept indicated by a direction indicator, in which: an emission-enabled region of the road surface rendering device includes a first region that is visible to another traffic participant behind an own vehicle and a second region that is invisible to the another traffic participant; and road surface rendering in the first region and road surface rendering in the second region are individually controllable.

According to the above configuration, the road surface rendering device can perform the road surface rendering indicating at least the same concept as the concept indicated by the direction indicator. Further, according to the above configuration, the road surface rendering in the first region that is visible to the another traffic participant behind the own vehicle and the road surface rendering in the second region that is invisible to the another traffic participant are individually controllable. The road surface rendering indicating the same concept as the concept indicated by the direction indicator can be used to transmit a traveling direction of the own vehicle to the another traffic participant behind the own vehicle. Therefore, for example, in a case where there is the another traffic participant behind the own vehicle, when the another traffic participant visually recognizes the road surface rendering indicating the same concept as the concept indicated by the direction indicator, the another traffic participant may misunderstand that the traveling direction of the own vehicle is transmitted by the road surface rendering. However, in the road surface rendering device according to the above configuration, the road surface rendering is not performed in the first region, and the road surface rendering is performed in the second region, so that the road surface rendering can be performed in the second region that is invisible to the another traffic participant. As described above, according to the road surface rendering device having the above configuration, even if there is the another traffic participant behind the own vehicle, the road surface rendering can be performed without causing the another traffic participant to misunderstand.

### ADVANTAGEOUS EFFECTS OF INVENTION

According to the present disclosure, it is possible to provide the road surface rendering device capable of performing road surface rendering without causing other traffic participants to misunderstand even when the other traffic participants are behind the own vehicle.

### BRIEF DESCRIPTION OF DRAWINGS

[FIG. 1] FIG. 1 is a front view of a vehicle on which a vehicle system according to an embodiment of the present disclosure (hereinafter, simply referred to as the present embodiment) is mounted.
[FIG. 2] FIG. 2 is a block diagram of the vehicle system according to the present embodiment.
[FIG. 3] FIG. 3 is a diagram illustrating a state when road surface rendering indicating the same concept as a concept indicated by a direction indicator is performed on a road surface.
[FIG. 4] FIG. 4 is a diagram illustrating a state when a welcome sign is illustrated in a situation where there is no other traffic participants around the vehicle in a first embodiment.
[FIG. 5] FIG. 5 is a diagram illustrating a state when a welcome sign is illustrated in a situation where another vehicle is behind the vehicle in the first embodiment.
[FIG. 6] FIG. 6 is a diagram illustrating a state when a welcome sign is illustrated in a second embodiment.

### DESCRIPTION OF EMBODIMENTS

Hereinafter, embodiments of the present disclosure will be described with reference to the drawings. Dimensions of members illustrated in the drawings may be different from actual dimensions of the members for convenience of description.

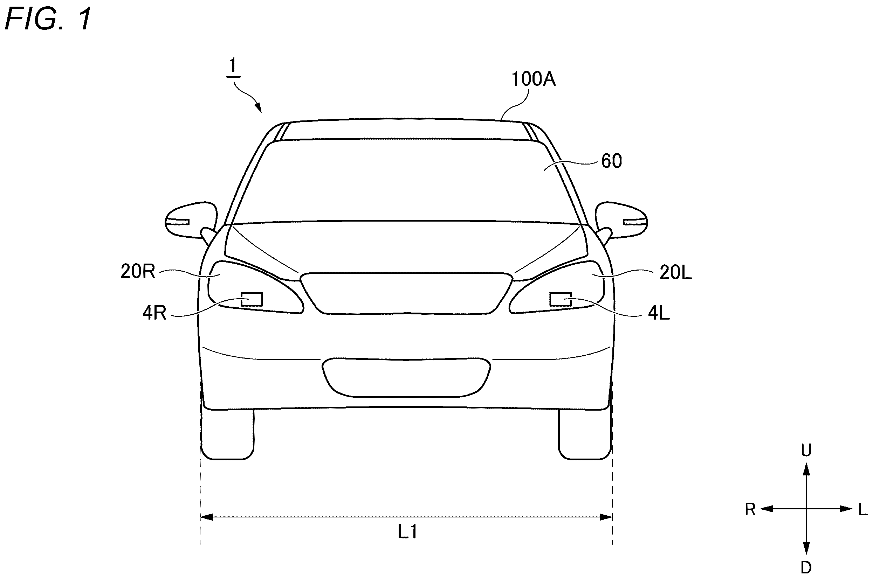

In the description of the present embodiment, a "left-right direction", an "up-down direction", and a "front-rear direction" may be appropriately referred to for convenience of description. The directions are relative directions set for a vehicle 1 illustrated in FIG. 1. Here, the "left-right direction" is a direction including a "left direction" and a "right direction", and is also a vehicle width direction of the vehicle 1. The "up-down direction" is a direction including an "up direction" and a "down direction". The "front-rear direction" includes a "front direction" and a "rear direction". Although not illustrated in FIG. 1, the front-rear direction is a direction orthogonal to the left-right direction and the up-down direction. In the drawings, a reference numeral U denotes the up direction. A reference numeral D denotes the down direction. A reference numeral F indicates the front direction. A reference numeral B indicates the rear direction. A reference numeral L indicates the left direction. A reference numeral R indicates the right direction.

### (First Embodiment)

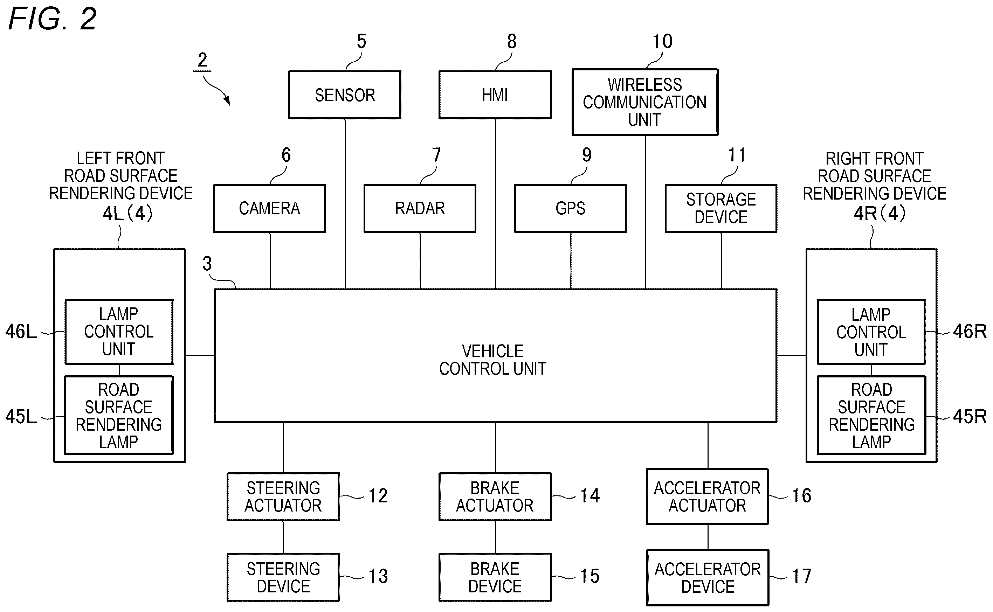

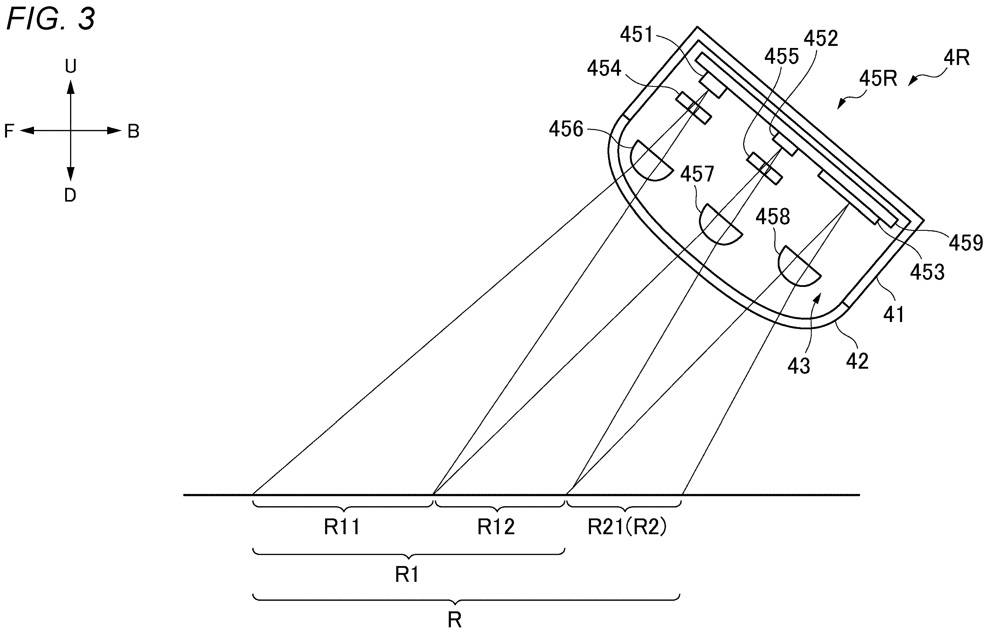

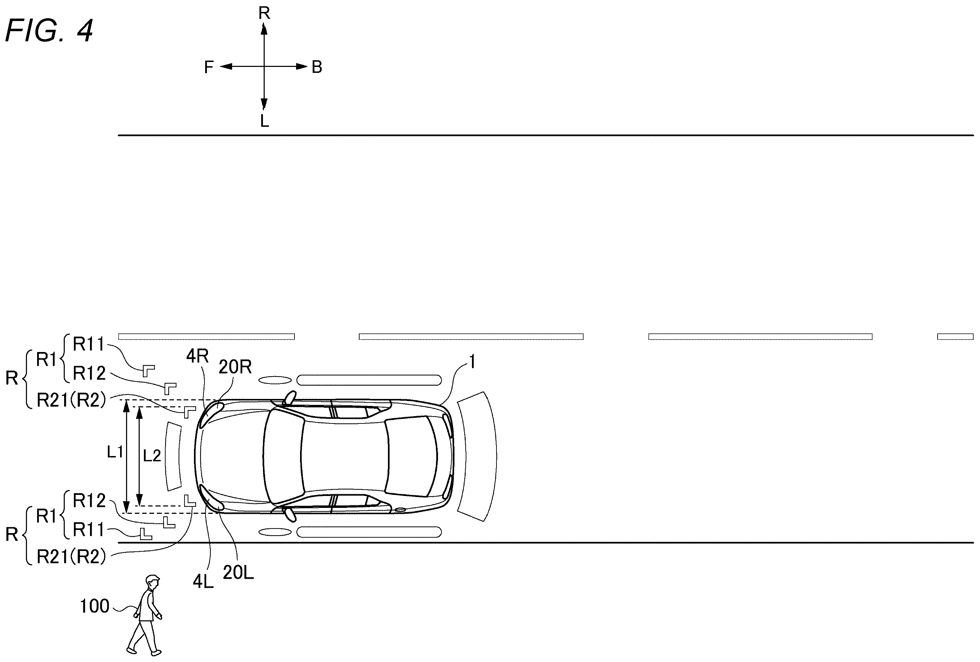

First, a vehicle system 2 according to the present embodiment will be described below with reference to FIGS. 1 to 4. FIG. 1 is a front view of the vehicle 1 on which the vehicle system 2 is mounted. FIG. 2 is a block diagram of the vehicle system 2. FIG. 3 is a diagram illustrating a state when road surface rendering indicating the same concept as a concept indicated by a direction indicator is performed on a road surface. FIG. 4 is a diagram illustrating a state when a welcome sign is illustrated in a situation where there is no other traffic participants around the vehicle 1. The vehicle 1 is, for example, a vehicle (automatic vehicle) that can travel in a manual driving mode or an autonomous driving mode.

As illustrated in FIG. 2, the vehicle system 2 includes a vehicle control unit 3, a road surface rendering device 4, a sensor 5, a camera 6, a radar 7, a human machine interface (HMI) 8, a global positioning system (GPS) 9, a wireless communication unit 10, a storage device 11, a steering actuator 12, a steering device 13, a brake actuator 14, a brake device 15, an accelerator actuator 16, and an accelerator device 17.

The vehicle control unit 3 is configured to control traveling of the vehicle 1. Further, the vehicle control unit 3 is configured to determine a surrounding environment of the vehicle 1 based on surrounding environment information to be described later, and generate a lamp control signal for controlling the road surface rendering device 4 based on the determination. The vehicle control unit 3 includes, for example, at least one electronic control unit (ECU). The electronic control unit includes a computer system (for example, a system on a chip (SoC)) including one or more processors and one or more memories, and an electronic circuit including an active element such as a transistor and a passive element. The processor includes, for example, at least one of a central processing unit (CPU), a micro processing unit (MPU), a graphics processing unit (GPU), and a tensor processing unit (TPU). The CPU may include a plurality of CPU cores. The GPU may include a plurality of GPU cores. The memory includes a read only memory (ROM) and a random access memory (RAM). The ROM may store a vehicle control program. For example, the vehicle control program may include an artificial intelligence (AI) program for autonomous driving. The RAM may temporarily store a vehicle control program, vehicle control data, and/or surrounding environment information indicating a surrounding environment of the vehicle. The processor may be configured to load, onto the RAM, a program designated from various vehicle control programs stored in the ROM, and execute various kinds of processing in cooperation with the RAM. The computer system may be implemented by a non-von Neumann computer such as an application specific integrated circuit (ASIC) or a field-programmable gate array (FPGA). Further, the computer system may be implemented by a combination of a von Neumann computer and a non-von Neumann computer.

The road surface rendering device 4 includes a right front road surface rendering device 4R (hereinafter, simply referred to as a road surface rendering device 4R) and a left front road surface rendering device 4L (hereinafter, simply referred to as a road surface rendering device 4L).

As illustrated in FIG. 1, the road surface rendering device 4L is disposed in a lamp chamber of a left headlamp 20L. The road surface rendering device 4L may be provided separately from the left headlamp 20L. The road surface rendering device 4L may be disposed on a roof 100A of the vehicle 1 or may be disposed on a bumper of the vehicle 1. The road surface rendering device 4R is disposed in a lamp chamber of a right headlamp 20R. The road surface rendering device 4R may be provided separately from the right headlamp 20R. The road surface rendering device 4R may be disposed on the roof 100A of the vehicle 1 or may be disposed on the bumper of the vehicle 1. As illustrated in FIG. 2, the road surface rendering device 4L includes a road surface rendering lamp 45L and a lamp control unit 46L. The road surface rendering device 4R includes a road surface rendering lamp 45R and a lamp control unit 46R. Details of the road surface rendering device 4L and the road surface rendering device 4R will be described later.

The sensor 5 will be described. The sensor 5 includes at least one of an acceleration sensor, a speed sensor, and a gyro sensor. The sensor 5 is configured to detect a travel state of the vehicle 1 and output travel state information to the vehicle control unit 3. The sensor 5 may further include a seat sensor configured to detect whether a driver is sitting in a driver seat, a face direction sensor configured to detect a direction of the face of the driver, an external weather sensor configured to detect an external weather condition, a human sensor configured to detect whether there is a person in the vehicle, and the like.

The camera 6 is, for example, a camera including an imaging element such as a charge-coupled device (CCD) or a complementary MOS (CMOS). The camera 6 is configured to detect the surrounding environment information indicating the surrounding environment of the vehicle 1 and transmit the surrounding environment information to the vehicle control unit 3. The surrounding environment information is, for example, information on traffic participants present around the vehicle 1, objects such as traffic signs and traffic lights present around the vehicle 1, and the like. The traffic participant is, for example, another vehicle such as a two-wheeled vehicle or a four-wheeled vehicle, a pedestrian, or the like.

The radar 7 includes at least one of a millimeter-wave radar, a microwave radar, and a LiDAR unit. For example, the LiDAR unit is configured to detect the surrounding environment information based on point cloud data indicating the surrounding environment of the vehicle 1 and transmit the surrounding environment information to the vehicle control unit 3.

The HMI 8 includes an input unit that receives an input operation from the driver and an output unit that outputs travel information on the vehicle 1 and the like to the driver. The input unit includes a steering wheel, an accelerator pedal, a brake pedal, a driving mode changeover switch for changing a driving mode of the vehicle 1, and the like. The output unit is a display device (for example, HUD) that displays various travel information. The HUD displays the travel information on the vehicle 1 on a front window 60. The GPS 9 is configured to acquire current position information of the vehicle 1 and output the acquired current position information to the vehicle control unit 3.

The wireless communication unit 10 is configured to receive information (for example, travel information) related to another vehicle in the surrounding of the vehicle 1 from the other vehicle, and transmit information (for example, the travel information) related to the vehicle 1 to the other vehicle (vehicle-to-vehicle communication). The wireless communication unit 10 is configured to receive infrastructure information from infrastructure equipment such as a traffic light and a sign lamp, and transmit the travel information of the vehicle 1 to the infrastructure equipment (road-to-vehicle communication). The wireless communication unit 10 is configured to receive information related to a pedestrian from a portable electronic device (a smartphone, a tablet, a wearable device, or the like) carried by the pedestrian, and transmit own vehicle travel information of the vehicle 1 to the portable electronic device (pedestrian-to-vehicle communication). The vehicle 1 may directly communicate with the other vehicle, the infrastructure equipment, or the portable electronic device in an ad hoc mode, or may communicate with the other vehicle, the infrastructure equipment, or the portable electronic device via an access point. Further, the vehicle 1 may communicate with the other vehicle, the infrastructure equipment, or the portable electronic device via a communication network such as the Internet.

The storage device 11 is an external storage device such as a hard disk drive (HDD) or a solid state drive (SSD). The storage device 11 may store two-dimensional or three-dimensional map information and/or a vehicle control program. For example, the three-dimensional map information may be implemented by point cloud data. The storage device 11 is configured to output the map information or the vehicle control program to the vehicle control unit 3 in response to a request from the vehicle control unit 3. The map information and the vehicle control program may be updated via the wireless communication unit 10 and a communication network.

When the vehicle 1 travels in an autonomous driving mode, the vehicle control unit 3 is configured to autonomously generates at least one of a steering control signal, an accelerator control signal, and a brake control signal based on the travel state information, the surrounding environment information, the current position information, the map information, and the like. The steering actuator 12 is configured to receive the steering control signal from the vehicle control unit 3, and control the steering device 13 based on the received steering control signal. The brake actuator 14 is configured to receive the brake control signal from the vehicle control unit 3, and control the brake device 15 based on the received brake control signal. The accelerator actuator 16 is configured to receive the accelerator control signal from the vehicle control unit 3, and control the accelerator device 17 based on the received accelerator control signal.

On the other hand, when the vehicle 1 travels in the manual driving mode, the vehicle control unit 3 generates the steering control signal, the accelerator control signal, and the brake control signal according to a manual operation of the driver on the accelerator pedal, the brake pedal, and the steering wheel. In this manner, since the steering control signal, the accelerator control signal, and the brake control signal are generated by the manual operation of the driver in the manual driving mode, traveling of the vehicle 1 is controlled by the driver.

Next, the road surface rendering device 4R will be described. As illustrated in FIG. 3, the road surface rendering lamp 45R includes a lamp body 41 having an opening in front of the road surface rendering lamp 45R, and a transparent outer cover 42 covering the opening of the lamp body 41. A first light source 451, a second light source 452, a third light source 453, a first light shielding portion 454, a second light shielding portion 455, a first projection lens 456, a second projection lens 457, a third projection lens 458, and a substrate 459 are accommodated in a lamp chamber 43 formed by the lamp body 41 and the outer cover 42.

The road surface rendering lamp 45R includes the first light source 451, the second light source 452, the third light source 453, the first light shielding portion 454, the second light shielding portion 455, the first projection lens 456, the second projection lens 457, the third projection lens 458, and the substrate 459. The first light source 451 and the second light source 452 are implemented by, for example, a plurality of light emitting diode (LED) elements or laser diode (LD) elements. The first light source 451 emits light toward the first light shielding portion 454. The second light source 452 emits light toward the second light shielding portion 455. The first light source 451 and the second light source 452 are mounted on the substrate 459.

The third light source 453 includes, for example, an LED array having a large number of pixels. The number of pixels may be 1,000 to 10,000. The third light source 453 emits light toward the third projection lens 458. The third light source 453 is mounted on the substrate 459.

The first light shielding portion 454 is, for example, a substantially rectangular plate-shaped member having a hole portion. The hole portion allows at least a part of light emitted from the first light source 451 to pass therethrough. On the other hand, a portion of the first light shielding portion 454 other than the hole portion is configured to shield light emitted from the first light source 451.

The second light shielding portion 455 is, for example, a substantially rectangular plate-shaped member having a hole portion. The hole portion allows at least a part of light emitted from the second light source 452 to pass therethrough. On the other hand, a portion of the second light shielding portion 455 other than the hole portion is configured to shield light emitted from the second light source 452.

The first projection lens 456 is an aspherical lens in which a front surface is a convex surface and a rear surface is a flat surface. The first projection lens 456 is formed of a transparent material such as a transparent resin such as acrylic. The first projection lens 456 is disposed in front of the first light source 451 and the first light shielding portion 454. The first projection lens 456 is configured to project the light emitted from the first light source 451 onto a first rendering spot R11 to be described later.

The second projection lens 457 may have the same configuration as the first projection lens 456. The second projection lens 457 is disposed in front of the second light source 452 and the second light shielding portion 455. The second projection lens 457 is configured to project the light emitted from the second light source 452 onto a second rendering spot R12 to be described later.

The second projection lens 458 may have the same configuration as the first projection lens 456. The third projection lens 458 is disposed in front of the third light source 453. The third projection lens 458 is configured to project the light emitted from the third light source 453 onto a third rendering spot R21 to be described later. In the present embodiment, the road surface rendering lamp 45R includes one third projection lens 458, but may include, for example, three third projection lenses 458. When the road surface rendering lamp 45R includes three third projection lenses 458, the influence of aberration can be reduced.

The substrate 459 is, for example, a plate-shaped member. The substrate 459 may be formed of, for example, a glass material such as silica glass, borosilicate silicate glass, or non-alkali borosilicate silicate glass, or a resin material such as polyethylene terephthalate, polyethylene naphthalate, polypropylene, or a cycloolefin polymer.

The road surface rendering lamp 45R may include, for example, a light source unit that emits light, a drive mirror, and an optical system such as a lens or a mirror. The drive mirror is configured to render a road surface by irradiating the road surface with light emitted from the light source unit. The drive mirror may include, for example, a micro electro mechanical systems (MEMS) mirror, a digital mirror device (DMD), or a blade mirror. For example, the light emitted from the light source unit may be scanned on the road surface by the MEMS mirror. In this manner, the road surface rendering may be performed by light scanning by the MEMS mirror.

Returning to FIG. 2, the lamp control unit 46R will be described. The lamp control unit 46R controls the road surface rendering lamp 45R to perform the road surface rendering on the road surface around the vehicle 1. A placement position of the lamp control unit 46R is not particularly limited. The lamp control unit 46R includes a microcontroller and an analog drive control circuit. The microcontroller includes a processor such as a CPU and a memory such as a ROM. The analog drive control circuit includes a current control circuit for controlling a current to be supplied to the first light source 451, the second light source 452 and the third light source 453. For example, the lamp control unit 46R controls turning on and off of the first light source 451, the second light source 452, and the third light source 453. When the road surface rendering lamp includes the drive mirror and the road surface rendering is changed by driving the drive mirror, the analog drive control circuit includes a mirror drive circuit that controls the drive mirror.

The lamp control unit 46R controls the road surface rendering lamp 45R based on the lamp control signal from the vehicle control unit 3. Specifically, the vehicle control unit 3 determines the surrounding environment of the vehicle 1 based on the surrounding environment information received from at least one of the camera 6 and the radar 7. When determining the surrounding environment of the vehicle 1 based on the received surrounding environment information, the vehicle control unit 3 generates the lamp control signal based on the determination and transmits the lamp control signal to the lamp control unit 46R. The lamp control unit 46R controls the road surface rendering lamp 45R based on the lamp control signal received from the vehicle control unit 3.

The road surface rendering device 4L may have the same configuration as the road surface rendering device 4R. Also in the road surface rendering device 4L, a projection method or a scan method can be adopted as a rendering method of the road surface rendering device 4L. The road surface rendering performed by the road surface rendering device 4L is basically the same as the road surface rendering performed by the road surface rendering device 4R.

As illustrated in FIGS. 3 and 4, the road surface rendering device 4R according to the present embodiment performs the road surface rendering in an emission-enabled region R that is a peripheral region of the vehicle 1. The emission-enabled region R includes a first region R1 and a second region R2.

The first region R1 is a region that is visible to other traffic participants behind the vehicle 1. The second region R2 is a region that is invisible to other traffic participants behind the vehicle 1. A length L2 (see FIG. 4) of the second region R2 in the width direction (left-right direction in FIG. 1) of the vehicle 1 is 100% or less of a length L1 (see FIGS. 1 and 4) of the vehicle 1 in the width direction, and preferably 80% or less of the length L1. In the present embodiment, the first region R1 includes the first rendering spot R11 and the second rendering spot R12.

The second region R2 includes a third rendering spot R21. The first rendering spot R11, the second rendering spot R12, and the third rendering spot R21 are arranged in this order from the front to the rear when a traveling direction of the vehicle 1 is the front direction. The first rendering spot R11, the second rendering spot R12, and the third rendering spot R21 have the same size. However, the first rendering spot R11, the second rendering spot R12, and the third rendering spot R21 may have different sizes.

As described above, the lamp control unit 46R controls turning on and off of the first light source 451, the second light source 452, and the third light source 453. Therefore, in the road surface rendering device 4R, the road surface rendering of the first region R1 (that is, the first rendering spot R11 and the second rendering spot R12) and the road surface rendering of the second region R2 (that is, the third rendering spot R21) are individually controllable.

The road surface rendering device 4R can perform the road surface rendering or the like indicating the same concept as the concept indicated by the direction indicator. Similarly to the road surface rendering device 4R, the road surface rendering device 4L can also perform the road surface rendering or the like indicating the same concept as the concept indicated by the direction indicator. The concept indicated by the direction indicator is a concept to be transmitted using the direction indicator (for example, turning right, turning left, the welcome sign, or the like). The road surface rendering indicating the same concept as the concept indicated by the direction indicator is the road surface rendering extending laterally from the vehicle 1. The road surface rendering extending laterally from the vehicle 1 is, for example, road surface rendering inclined at an angle of 10 degrees or more and 90 degrees or less with respect to the front-rear direction of the vehicle 1. For example, the road surface rendering device 4R irradiates the first rendering spot R11, the second rendering spot R12, and the third rendering spot R21 with light to perform the road surface rendering indicating the same concept as the concept indicated by the direction indicator. That is, the road surface rendering indicating the same concept as the concept indicated by the direction indicator can be performed across the first region R1 and the second region R2. A projection method or a scan method may be adopted as a rendering method of the road surface rendering device 4R. Further, the road surface rendering device 4R may perform the road surface rendering indicating the same concept as the concept indicated by the direction indicator as a sequential light pattern. In the sequential light pattern P, an irradiation region changes in a stepwise manner with the elapse of time.

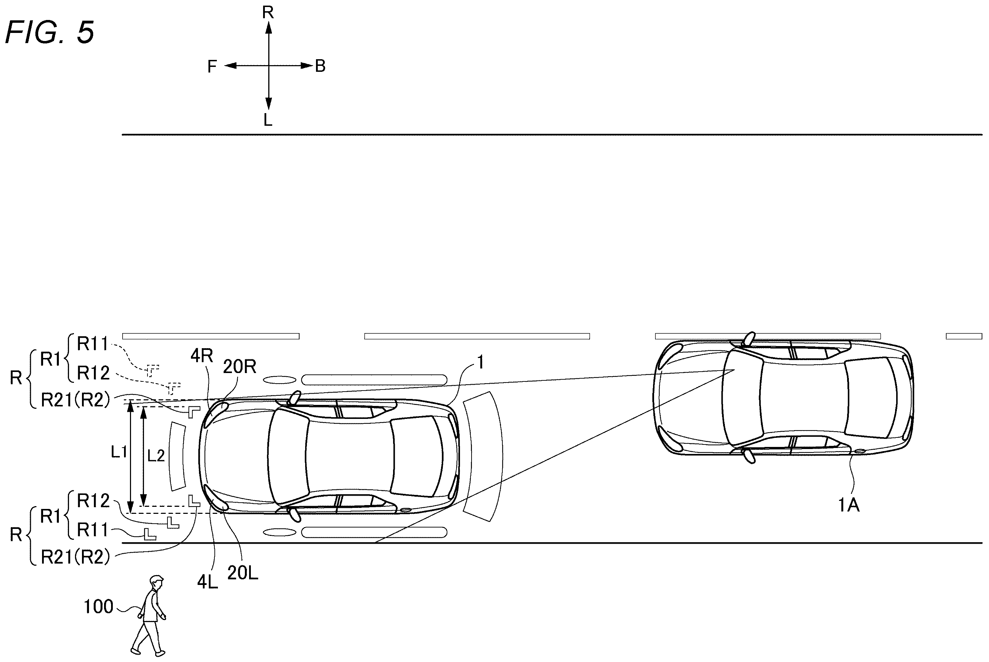

Next, a state when the vehicle 1 illustrates a welcome sign will be described with reference to FIGS. 4 and 5. FIG. 5 is a diagram illustrating a state when a welcome sign is illustrated in a situation where another vehicle 1A (an example of the other traffic participant) is behind the vehicle 1. In FIG. 5, a portion corresponding to the road surface rendering indicated by a broken line indicates a portion where light is not emitted from the road surface rendering device 4R. In the present embodiment, the vehicle 1 includes not only the road surface rendering device 4 but also a headlamp, a brake lamp, a door mirror lamp, and a foot lamp. As the headlamp, the brake lamp, the door mirror lamp, and the foot lamp provided in the vehicle 1, known lamps can be adopted. Therefore, in the present description, detailed description of the headlamp, the brake lamp, the door mirror lamp, and the foot lamp is omitted. In the present embodiment, when the welcome sign is displayed, not only the road surface rendering device 4 but also the headlamp, the brake lamp, the door mirror lamp, and the foot lamp are all turned on.

In the present example, the road surface rendering device 4R, 4L includes a swivel mechanism (not illustrated) capable of changing orientation of an optical axis by rotating the road surface rendering lamp 45R, 45L in a desired direction. In the present embodiment, the camera 6 and the radar 7 can sense the surrounding environment of the vehicle 1 immediately after the state of the vehicle 1 becomes an unlocked state. The lamp control units 46R and 46L control the road surface rendering device 4 so as to indicate a welcome sign according to the surrounding environment information including the information on an owner 100 of the vehicle 1 acquired by the camera 6 and the radar 7. Similarly, each lamp such as a headlamp provided in the vehicle 1 is controlled to indicate a welcome sign by each lamp control unit according to the surrounding environment information including the information on the owner 100 of the vehicle 1 acquired by the camera 6 or the radar 7. The display of the welcome sign includes the road surface rendering indicating the same concept as the concept indicated by the direction indicator. In the present embodiment, the road surface rendering indicating the same concept as the concept indicated by the direction indicator is road surface rendering including a substantially L-shaped figure. However, it goes without saying that a mode of road surface rendering indicating the same concept as the concept indicated by the direction indicator is not limited to this example.

As illustrated in FIGS. 4 and 5, in the present embodiment, the road surface rendering indicating the same concept as the concept indicated by the direction indicator is road surface rendering inclined by about 30 degrees with respect to the front-rear direction of the vehicle 1. However, it goes without saying that an inclination angle of the road surface rendering indicating the same concept as the concept indicated by the direction indicator with respect to the front-rear direction of the vehicle 1 is not limited to about 30 degrees. As described above, in the present embodiment, the road surface rendering indicating the same concept as the concept indicated by the direction indicator is the road surface rendering extending laterally from the vehicle 1. In the present embodiment, the length L2 of the second region R2 in the width direction of the vehicle 1 is 80% of the length L1 of the vehicle 1 in the width direction. Therefore, only the first region R1 is visible to the vehicle 1A, and the second region R2 is invisible to the vehicle 1A.

As illustrated in FIG. 4, when the owner 100 of the vehicle 1 approaches the vehicle 1 and the state of the vehicle 1 becomes the unlocked state, the camera 6 and the radar 7 acquire surrounding environment information including information on the owner 100. For example, when the camera 6 captures an image of the owner 100, the camera 6 transmits imaging data (an example of the surrounding environment information) related to the owner 100 to the vehicle control unit 3.

The vehicle control unit 3 determines the surrounding environment of the vehicle 1 based on the received surrounding environment information such as the imaging data. In the example illustrated in FIG. 4, the vehicle control unit 3 determines that the owner 100 is present on a left front side of the vehicle 1 and that no other traffic participant is present around the vehicle 1 based on the received surrounding environment information. The vehicle control unit 3 generates a first lamp control signal based on the presence of the owner 100 on the left front side of the vehicle 1. The vehicle control unit 3 transmits the first lamp control signal to the lamp control units 46R and 46L. Further, the vehicle control unit 3 generates a second lamp control signal based on the fact that there is no other traffic participant around the vehicle 1. The vehicle control unit 3 transmits the second lamp control signal to the lamp control unit 46R.

The lamp control units 46R and 46L determine to display the welcome sign based on the received first lamp control signal, and control the road surface rendering lamps 45R and 45L. At this time, the lamp control unit 46L determines to perform the road surface rendering indicating the same concept as the concept indicated by the direction indicator in the first region R1 and the second region R2 based on the first lamp control signal, and controls the road surface rendering lamp 45L.

On the other hand, the lamp control unit 46R determines to perform the road surface rendering indicating the same concept as the concept indicated by the direction indicator in the first region R1 and the second region R2 based on the received second lamp control signal, and controls the road surface rendering lamp 45R. As a result, in the example illustrated in FIG. 4, the road surface rendering indicating the same concept as the concept indicated by the direction indicator is performed across the first region R1 and the second region R2.

Next, an operation of the road surface rendering device 4 in the situation illustrated in FIG. 5 will be described. As illustrated in FIG. 5, when the owner 100 of the vehicle 1 approaches the vehicle 1 and the state of the vehicle 1 becomes the unlocked state, the camera 6 and the radar 7 acquire surrounding environment information including information on the owner 100. For example, when the camera 6 captures an image of the owner 100, the camera 6 transmits imaging data (an example of the surrounding environment information) related to the owner 100 to the vehicle control unit 3. At this time, for example, when the camera 6 captures an image of the vehicle 1A behind the vehicle 1, the camera 6 transmits imaging data (an example of the surrounding environment information) regarding the vehicle 1A to the vehicle control unit 3.

The vehicle control unit 3 determines the surrounding environment of the vehicle 1 based on the received surrounding environment information such as the imaging data. In the example illustrated in FIG. 5, the vehicle control unit 3 determines that the owner 100 is present on the left front side of the vehicle 1 and that the vehicle 1A is present behind the vehicle 1 based on the received surrounding environment information. The vehicle control unit 3 generates the first lamp control signal based on the presence of the owner 100 on the left front side of the vehicle 1. The vehicle control unit 3 transmits the first lamp control signal to the lamp control units 46R and 46L. Further, the vehicle control unit 3 generates a third lamp control signal based on the presence of the vehicle 1A behind the vehicle 1. The vehicle control unit 3 transmits the third lamp control signal to the lamp control unit 46R.

The lamp control units 46R and 46L determine to display the welcome sign based on the received first lamp control signal, and control the road surface rendering lamps 45R and 45L. At this time, the lamp control unit 46L determines to perform the road surface rendering indicating the same concept as the concept indicated by the direction indicator in the first region R1 and the second region R2 based on the first lamp control signal, and controls the road surface rendering lamp 45L.

On the other hand, the lamp control unit 46R determines to perform the road surface rendering indicating the same concept as the concept indicated by the direction indicator only in the second region R2 based on the received third lamp control signal, and controls the road surface rendering lamp 45R. As a result, the road surface rendering indicating the same concept as the concept indicated by the direction indicator by the road surface rendering device 4L is performed across the first region R1 and the second region R2, whereas the road surface rendering indicating the same concept as the concept indicated by the direction indicator by the road surface rendering device 4R is performed only in the second region R2.

As described above, in the road surface rendering device 4, the mode of the road surface rendering in the first region R1 changes according to the surrounding environment information of the vehicle 1. That is, the mode of the road surface rendering in the first region R1 by the road surface rendering device 4R when there is no other traffic participant around the vehicle 1 is different from the mode of the road surface rendering in the first region R1 by the road surface rendering device 4R when there is the other vehicle 1A behind the vehicle 1.

The welcome sign is displayed when the owner 100 enters the vehicle 1. In recent years, the welcome sign is regarded as important as a function of emphasizing the individuality of the vehicle, and it is preferable to display the welcome sign by turning on as many lamps as possible among the lamps provided in the vehicle 1.

However, the welcome sign is not originally intended to indicate the start or the traveling direction of the vehicle 1. On the other hand, unlike the welcome sign, the road surface rendering indicating the same concept as the concept indicated by the direction indicator is originally road surface rendering indicating the start and the traveling direction of the vehicle 1. Therefore, if the road surface rendering device 4 is also turned on in order to display the welcome sign, it may misunderstand vehicles or the like around the vehicle 1.

This will be specifically described with reference to FIG. 5. FIG. 5 illustrates a case where a welcome sign is displayed in a state where the vehicle 1 is stopped at a position close to a sidewalk on a roadway. As illustrated in FIG. 5, the road surface rendering by the road surface rendering device 4L that the vehicle 1 irradiates onto the sidewalk side is shielded by the vehicle 1, and thus is invisible to the vehicle 1A approaching the vehicle 1 from the rear. On the other hand, the road surface rendering by the road surface rendering device 4R that the vehicle 1 irradiates on a center line side is not shielded by the vehicle 1 and thus is visible to the vehicle 1A approaching the vehicle 1 from the rear. Therefore, when the vehicle 1A visually recognizes the road surface rendering indicating the same concept as the concept indicated by the direction indicator by the road surface rendering device 4R, the vehicle 1A may misunderstand that the vehicle 1 is about to start. As described above, when the welcome sign is displayed, if the road surface rendering indicating the same concept as the concept indicated by the direction indicator is visible to the vehicle 1A, the vehicle 1A located behind may misunderstand that the vehicle 1 is about to start.

However, according to the road surface rendering device 4 having the above configuration, the road surface rendering in the first region R1 that is visible to the other vehicle 1A behind the vehicle 1 and the road surface rendering in the second region R2 that is invisible to the vehicle 1A are individually controllable. Therefore, for example, when the vehicle 1A is behind the vehicle 1, the road surface rendering is not performed in the first region R1, but the road surface rendering is performed in the second region R2, so that the road surface rendering can be performed in the second region R2 that is invisible to the vehicle 1A. Therefore, according to the road surface rendering device 4, even if the vehicle 1A is behind the vehicle 1, the road surface rendering can be performed without causing the vehicle 1A to misunderstand.

According to the road surface rendering device 4 having the above configuration, the road surface rendering indicating the same concept as the concept indicated by the direction indicator is the road surface rendering extending laterally from the vehicle 1. Such a road surface rendering is often performed also in a region that is visible to other traffic participants behind the vehicle 1. However, according to the road surface rendering device 4, for example, when there is the other vehicle 1A behind the vehicle 1, the road surface rendering can be performed only in the second region R2 that is invisible to the vehicle 1A. Therefore, according to the road surface rendering device 4, even if the vehicle 1A is behind the vehicle 1, the road surface rendering can be performed without causing the vehicle 1A to misunderstand.

According to the road surface rendering device 4 having the above configuration, the length L2 of the second region R2 in the width direction of the vehicle 1 is 80% of the length L1 of the vehicle 1 in the width direction. That is, the length L2 of the second region R2 in the width direction of the vehicle 1 is 100% or less of the length L1 of the vehicle 1 in the width direction. Therefore, according to the road surface rendering device 4, since the road surface rendering performed when the other vehicle 1A is present behind the vehicle 1 is performed in the second region R2 having a length of 80% of the length L1 of the vehicle 1 in the width direction, the vehicle 1 becomes a blind spot and the second region R2 is invisible to the vehicle 1A.

According to the road surface rendering device 4 having the above configuration, since the mode of the road surface rendering in the first region R1 changes according to the surrounding environment information, it is possible to perform appropriate road surface rendering according to the situation around the vehicle 1.

When the road surface rendering device 4 displays the welcome sign, the road surface rendering is often performed in both the first region R1 and the second region R2, but in the road surface rendering device 4, when the welcome lamp is displayed, the road surface rendering can be performed in the second region R2 while the road surface rendering is not performed in the first region R1. Therefore, according to the road surface rendering device 4, even if there is the other vehicle 1A behind the vehicle 1, the road surface rendering can be performed without causing the vehicle 1A to misunderstand.

According to the road surface rendering device 4 having the above configuration, when there is no other vehicle 1A behind the vehicle 1, the road surface rendering is performed in the region including the first region R1 (that is, the first region R1 and the second region R2), but when there is the vehicle 1A behind the vehicle 1, the road surface rendering is not performed in the first region R1. Therefore, according to the road surface rendering device 4, even if the vehicle 1A is behind the vehicle 1, the road surface rendering can be performed without causing the vehicle 1A to misunderstand.

### (Second Embodiment)

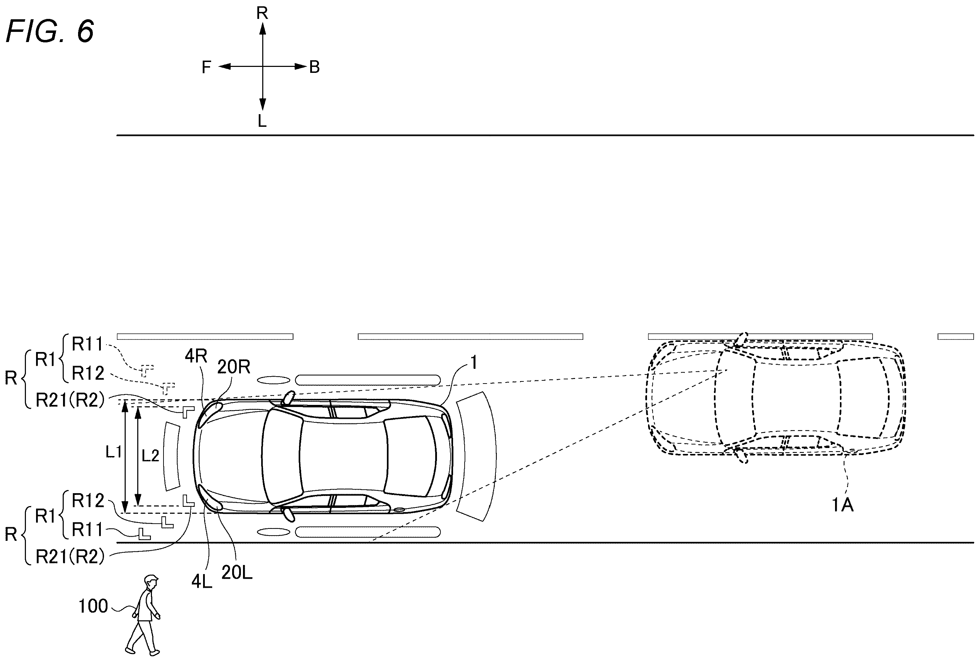

Next, a second embodiment will be described with reference to FIG. 6. In the second embodiment, the same parts as those in the first embodiment are denoted by the same reference numerals, and the description thereof will be appropriately omitted. FIG. 6 is a diagram illustrating a state when a welcome sign is illustrated in the second embodiment. The present embodiment is different from the first embodiment in that turning on and off of the road surface rendering in the first region R1 by the road surface rendering device 4R is not determined according to the surrounding environment information. Specifically, the second embodiment is different from the first embodiment in that the road surface rendering in the first region R1 by the road surface rendering device 4R is always in a turning-off state. Also in the present embodiment, the camera 6 and the radar 7 can sense the surrounding environment of the vehicle 1 immediately after the state of the vehicle 1 becomes the unlocked state. Also in the present embodiment, the vehicle 1 includes not only the road surface rendering device 4 but also a headlamp, a brake lamp, a door mirror lamp, and a foot lamp. Also in the present embodiment, when the welcome sign is displayed, not only the road surface rendering device 4 but also the headlamp, the brake lamp, the door mirror lamp, and the foot lamp are all turned on. Further, also in the present embodiment, only the first region R1 is visible to the vehicle 1A. That is, only the first region R1 is visible to the vehicle 1A, and the second region R2 is invisible to the vehicle 1A.

As illustrated in FIG. 6, when the owner 100 of the vehicle 1 approaches the vehicle 1 and the state of the vehicle 1 becomes the unlocked state, the camera 6 and the radar 7 acquire surrounding environment information including information on the owner 100. For example, when the camera 6 captures an image of the owner 100, the camera 6 transmits imaging data (an example of the surrounding environment information) related to the owner 100 to the vehicle control unit 3.

The vehicle control unit 3 determines the surrounding environment of the vehicle 1 based on the received surrounding environment information such as the imaging data. In the present embodiment, the vehicle control unit 3 determines that the owner 100 is present on the left front side of the vehicle 1 based on the received surrounding environment information, and generates a fourth lamp control signal. The vehicle control unit 3 transmits the fourth lamp control signal to the lamp control units 46L and 46R.

The lamp control units 46L and 46R determine to display the welcome sign based on the received fourth lamp control signal. In the present embodiment, the road surface rendering indicating the same concept as the concept indicated by the direction indicator performed by the road surface rendering device 4L is performed across the first region R1 and the second region R2 regardless of whether the vehicle 1A is present behind the vehicle 1. On the other hand, the road surface rendering indicating the same concept as the concept indicated by the direction indicator performed by the road surface rendering device 4R is performed only in the second region R2 regardless of whether the vehicle 1A is present behind the vehicle 1. Therefore, the road surface rendering device 4 can perform the road surface rendering without causing the vehicle 1A to misunderstand even if the vehicle 1A is present behind the vehicle 1.

As described above, according to the road surface rendering device 4, the same effects as those of the first embodiment can be obtained also in the second embodiment.

Although the embodiments of the present disclosure have been described above, it is needless to say that the technical scope of the present disclosure should not be construed as being limited by the description of the embodiments. The present embodiment is merely an example, and it will be obvious to those skilled in the art that various embodiments can be changed within the scope of the disclosure described in the claims. The technical scope of the present disclosure is determined based on the scope of the disclosure described in the claims and the equivalent scope thereof.

In the above embodiment, the first light source 451, the second light source 452, and the third light source 453 are mounted on the single substrate 459, but may be mounted on different substrates.

In the above embodiment, the vehicle 1A has been described as the other traffic participant present behind the vehicle 1, but the traffic participant may be a two-wheeled vehicle, a pedestrian, or the like.

In the first embodiment described above, in a case where the road surface rendering device 4 displays the welcome sign when the vehicle 1A is present behind the vehicle 1, the road surface rendering device 4R does not perform the road surface rendering in the first region R1, but the road surface rendering device 4R may perform the road surface rendering in the first region R1 with a brightness that is invisible to the vehicle 1A. Even in this case, the road surface rendering in the first region R1 is difficult to be visually recognized from the other vehicle 1A behind the vehicle 1. Therefore, the road surface rendering device 4 can perform the road surface rendering without causing the vehicle 1A to misunderstand even if the vehicle 1A is behind the vehicle 1.

In the second embodiment described above, the road surface rendering device 4R does not perform the road surface rendering in the first region R1, but the road surface rendering device 4R may perform the road surface rendering in the first region R1 with a brightness that is invisible to the vehicle 1A. In this case, the road surface rendering device 4 can perform the road surface rendering without causing the vehicle 1A to misunderstand even if the vehicle 1A is behind the vehicle 1.

In the first embodiment described above, when there is no other traffic participant around the vehicle 1, the road surface rendering device 4 performs the road surface rendering in the first region R1 and the second region R2, but may perform the road surface rendering only in the first region R1.

In the above embodiment, when the road surface rendering device 4R performs the road surface rendering only in the second region R2, the first light source 451 and the second light source 452 may be controlled to be in the turning-off state, and the third light source 453 may be controlled to perform the road surface rendering at the same brightness as when performing the road surface rendering in the first region R1 and the second region R2, but the present disclosure is not limited thereto. For example, the road surface rendering device 4R may make the brightness of the road surface rendering in the second region R2 when the road surface rendering device 4R performs the road surface rendering only in the second region R2 brighter than the brightness of the road surface rendering in the second region R2 when performing the road surface rendering in at least the first region R1. In this case, when the road surface rendering device 4R performs the road surface rendering only in the second region R2, the current supplied to the first light source 451, the second light source 452, and the third light source 453 when performing the road surface rendering in the first region R1 and the second region R2 may be supplied to the third light source 453. For example, a color of the road surface rendering performed in the second region R2 when the road surface rendering device 4R performs the road surface rendering only in the second region R2 may be different from a color of the road surface rendering performed in the second region R2 when performing the road surface rendering in the first region R1 and the second region R2. For example, a thickness of an outline line of the road surface rendering performed in the second region R2 when the road surface rendering device 4R performs the road surface rendering only in the second region R2 may be different from a thickness of an outline line of the road surface rendering performed in the second region R2 when performing the road surface rendering in the first region R1 and the second region R2. For example, the road surface rendering in the second region R2 when the road surface rendering device 4R performs the road surface rendering in the first region R1 and the second region R2 may be static road surface rendering, whereas the road surface rendering in the second region R2 when performing the road surface rendering only in the second region R2 may be dynamic road surface rendering. As described above, the road surface rendering device 4 can be designed such that a lighting mode of the road surface rendering device 4 when the road surface rendering is performed only in the second region R2 is different from a lighting mode of the road surface rendering device 4 when the road surface rendering is performed in the region including at least the first region R1. In this case, a lighting mode of the road surface rendering device 4 when the road surface rendering is not performed in the first region R1 is different from a lighting mode of the road surface rendering device 4 when the road surface rendering is performed in the region including at least the first region R1. For example, in a case where the lighting mode of the road surface rendering device 4 when the road surface rendering is not performed in the first region R1 is blinking, the road surface rendering device 4 can perform eye-catching road surface rendering in the second region R2 while making the road surface rendering invisible to the other vehicle 1A behind the vehicle 1.

In the above embodiment, the road surface rendering (invariant image) formed of a substantially L-shaped figure is rendered in the second region R2 regardless of whether the other vehicle 1A is present behind the vehicle 1, but for example, a variable image may be rendered in the second region R2. The invariant image is an image in which only brightness can be changed, and the variable image is an image in which not only brightness but also a shape, a color, and the like of the image can be changed. That is, for example, the image rendered in the second region R2 when the vehicle 1A is present behind the vehicle 1 may be different from the image rendered in the second region R2 when the vehicle 1A is not present behind the vehicle 1. In a case where the variable image is rendered in the second region R2, the road surface rendering can be appropriately changed according to the situation, so that the road surface rendering device 4 can perform appropriate road surface rendering in the second region R2 that is invisible to the vehicle 1A behind the vehicle 1. The variable image may be rendered not only in the second region R2 but also in the first region R1.

In the above embodiment, the length L2 of the second region R2 in the width direction of the vehicle 1 is 80% of the length L1 of the vehicle 1 in the width direction, but the length L2 of the second region R2 in the width direction of the vehicle 1 may be 100% or less of the length L1 of the vehicle 1 in the width direction, and is not limited to 80%.

In the above embodiment, the determination of the surrounding environment of the vehicle 1 based on the received surrounding environment information is performed by the vehicle control unit 3, but may be performed by the lamp control units 46L and 46R.

In the above embodiment, the determination of the region where the road surface rendering is performed and the determination of the mode of the road surface rendering are performed by the lamp control units 46L and 46R, but these determinations may be performed by the vehicle control unit 3.

As described above, the following matters are disclosed in the present description.
(1) A road surface rendering device configured to perform road surface rendering indicating at least a concept which is the same as a concept indicated by a direction indicator, in which: an emission-enabled region of the road surface rendering device includes a first region that is visible to another traffic participant behind an own vehicle and a second region that is invisible to the another traffic participant; and road surface rendering in the first region and road surface rendering in the second region are individually controllable.
(2) The road surface rendering device according to (1), in which the road surface rendering indicating the concept which is the same as the concept indicated by the direction indicator is road surface rendering extending laterally from the own vehicle.
(3) The road surface rendering device according to (1) or (2), in which a variable image is rendered in at least the second region.
(4) The road surface rendering device according to any one of (1) to (3), in which a length of the second region in a width direction of the own vehicle is 100% or less of a length of the own vehicle in the width direction.
(5) The road surface rendering device according to any one of (1) to (4), in which a mode of the road surface rendering in the first region changes in accordance with surrounding environment information on the own vehicle.
(6) The road surface rendering device according to any one of (1) to (5), in which: the road surface rendering device is configured to display a welcome sign; and the road surface rendering in the second region is brighter than the road surface rendering in the first region when the road surface rendering device displays the welcome sign.
(7) The road surface rendering device according to any one of (1) to (5), in which: the road surface rendering device is configured to display a welcome sign; and the road surface rendering device performs the road surface rendering in the second region and does not perform the road surface rendering in the first region when the road surface rendering device displays the welcome sign.
(8) The road surface rendering device according to any one of (1) to (6), in which the road surface rendering in the second region is brighter than the road surface rendering in the first region when there is the another traffic participant behind the own vehicle.
(9) The road surface rendering device according to any one of (1), (2), (3) (4), (5), and (7), in which: the road surface rendering device performs the road surface rendering in a region including at least the first region when there is no other traffic participant behind the own vehicle; and
   the road surface rendering device does not perform the road surface rendering in the first region when there is the another traffic participant behind the own vehicle.
(10) The road surface rendering device according to any one of (1), (2), (3), (4), (5), (7), and (9), in which a lighting mode of the road surface rendering device when the road surface rendering is not performed in the first region is different from a lighting mode of the road surface rendering device when the road surface rendering is performed in a region including at least the first region.

The present application is based on a Japanese patent application (patent application No. 2022-127814) filed on August 10, 2022, and the contents thereof are incorporated herein by reference.

## Claims

1. A road surface rendering device configured to perform road surface rendering indicating at least a concept which is the same as a concept indicated by a direction indicator,
wherein an emission-enabled region of the road surface rendering device includes a first region that is visible to another traffic participant behind an own vehicle and a second region that is invisible to the another traffic participant, and
wherein road surface rendering in the first region and road surface rendering in the second region are individually controllable.

2. The road surface rendering device according to claim 1,
wherein the road surface rendering indicating the concept which is the same as the concept indicated by the direction indicator is road surface rendering extending laterally from the own vehicle.

3. The road surface rendering device according to claim 1 or 2,
wherein a variable image is rendered in at least the second region.

4. The road surface rendering device according to claim 1 or 2,
wherein a length of the second region in a width direction of the own vehicle is 100% or less of a length of the own vehicle in the width direction.

5. The road surface rendering device according to claim 1 or 2,
wherein a mode of the road surface rendering in the first region changes in accordance with surrounding environment information on the own vehicle.

6. The road surface rendering device according to claim 1 or 2,
wherein the road surface rendering device is configured to display a welcome sign, and
wherein the road surface rendering in the second region is brighter than the road surface rendering in the first region when the road surface rendering device displays the welcome sign.

7. The road surface rendering device according to claim 1 or 2,
wherein the road surface rendering device is configured to display a welcome sign, and
wherein the road surface rendering device performs the road surface rendering in the second region and does not perform the road surface rendering in the first region when the road surface rendering device displays the welcome sign.

8. The road surface rendering device according to claim 1 or 2,
wherein the road surface rendering in the second region is brighter than the road surface rendering in the first region when there is the another traffic participant behind the own vehicle.

9. The road surface rendering device according to claim 1 or 2,
wherein the road surface rendering device performs the road surface rendering in a region including at least the first region when there is no other traffic participant behind the own vehicle, and
wherein the road surface rendering device does not perform the road surface rendering in the first region when there is the another traffic participant behind the own vehicle.

10. The road surface rendering device according to claim 1 or 2,
wherein a lighting mode of the road surface rendering device when the road surface rendering is not performed in the first region is different from a lighting mode of the road surface rendering device when the road surface rendering is performed in a region including at least the first region.
